# EUROPEAN PATENT SPECIFICATION

(11) **EP 2 086 834 B1**
(45) Date of publication and mention of the grant of the patent: **27.07.2011**
(21) Application number: 07847332.9
(22) Date of filing: 26.11.2007
(51) Int. Cl.: B64D 27/02

(54) **PROPULSION DEVICE WITH A PLURALITY OF ENERGY CONVERTERS FOR AN AIRCRAFT**
ANTRIEBSVORRICHTUNG MIT MEHREREN ENERGIEUMWANDLERN FÜR EIN LUFTFAHRZEUG
DISPOSITIF DE PROPULSION MUNI D'UNE PLURALITÉ DE CONVERTISSEURS D'ÉNERGIE POUR UN AVION

(30) Priority: 29.11.2006 DE 102006056356; 29.11.2006 US 861667 P
(43) Date of publication of application: 12.08.2009
(73) Proprietor: Airbus Operations GmbH, 21129 Hamburg (DE)
(72) Inventor: WESTENBERGER, Andreas, 21614 Buxtehude (DE)
(74) Representative: Kopf, Korbinian Paul
(86) International application number: PCT/EP2007/062796
(87) International publication number: WO 2008/065065

(56) References cited:
- FR-A- 1 511 665
- GB-A- 2 376 928
- US-A- 3 388 684
- US-A- 3 825 027
- US-B1- 6 306 056

## Description

### Field of the Invention

The present invention relates to a propulsion device and to a method for propelling an aircraft, as well as to the use of a propulsion device in an aircraft, and to an aircraft comprising a propulsion device.

### Technological Background

At present, air traffic accounts for a small share in the global crude oil consumption and in air pollution. However, this share is increasing as the other air-polluting means of transport decrease and air traffic increases. Furthermore, the improvement potential and development potential of present-day civil commercial aircraft have arrived at a point where only with very large expenditure is it possible to achieve even slight improvements.

For these reasons attempts are being made to render the noxious gases of aircraft engines more environmentally sustainable either by using certain types of fuel, or to reduce fuel consumption with the use of certain propulsion systems.

Aircraft featuring hybrid propulsion systems are known in an attempt to reduce pollutants. In this arrangement, aircraft forward thrust may be achieved by a combination of various engines or propulsion units. The following are, for example, common combinations: piston engines and jet engines; piston engines and rocket engines; jet engines and rocket engines; or turbojet engines and ramjet engines. These hybrid propulsion systems were, for example, implemented in the experimental aircraft Mikojan-Gurevich MiG-13 or the Nord 1500 Griffon. Each hybrid propulsion system comprises several propulsion units with an associated engine. A piston powerplant comprises, for example, a piston engine for generating propulsion energy, and an airscrew or propeller, while the jet engine comprises a combustion chamber for generating propulsion energy, and a compressor. If forward thrust from one propulsion unit, for example the piston engine, is not used, then the propeller remains in the airstream and generates air resistance or drag.

GB 2 376 928 A describes a tilt motor aircraft with a multitude of motors. Combustion engines and emergency electric motors are provided.

### Summary of the invention

Among other things, it may be an object of the present invention to provide a propulsion device providing low pollutant emission.

According to the invention, a propulsion device for an aircraft is provided. The propulsion device comprises a first energy converter, a second energy converter as well as a propulsion unit. The first energy converter is adapted to provide first propulsion energy. The second energy converter is adapted to provide second propulsion energy. The first energy converter and the second energy converter are adapted to provide the first propulsion energy and the second propulsion energy to the propulsion unit. The propulsion unit is adapted to generate forward thrust by the first propulsion energy and/or the second propulsion energy.

According to the invention, a method for propelling an aircraft is provided. First propulsion energy is provided by a first energy converter. Second propulsion energy is provided by a second energy converter. A propulsion unit is supplied with the first propulsion energy and/or with the second propulsion energy.

According to a further exemplary embodiment, the propulsion device described above is used in an aircraft.

According to a further exemplary embodiment, an aircraft with the propulsion device described above is provided.

The term "energy converters" refers to machines that convert energy. These may, for example, comprise internal combustion engines which, based on fuels, generate a propulsion moment or propulsion energy. Furthermore, energy converters may, for example, comprise motors such as electric motors that generate propulsion energy from electrical energy, or energy converters may comprise combustion chambers which, based on kerosene, generate propulsion energy.

The term "propulsion unit" refers to devices that may generate aircraft forward thrust. Such a propulsion unit may, for example, be a propeller or an airscrew which based on its rotation creates aircraft forward thrust. Moreover, for example a compressor stage or a fan of an aircraft engine may be a propulsion unit, because the fan or the compressor blades generate an air stream and thus forward thrust. A further propulsion unit may comprise a rocket engine or a ramjet engine.

The term "propulsion energy" refers to the energy that the propulsion unit requires to be able to generate aircraft forward thrust. Propulsion energy may, for example, be transmitted, in the form of torque, to a shaft.

The aircraft's propulsion device according to the invention may now comprise two energy converters in order to drive a propulsion unit. This may, for example, be designed such that one propulsion unit, for example a turbine stage of a jet engine, comprises two combustion chambers. The first energy converter and the second energy converter may, either together or separately from each other, provide first propulsion energy to second propulsion energy to the propulsion unit, so that said propulsion unit may generate forward thrust of the aircraft.

In this way a propulsion device may be created that comprises several energy converters without the need for a multitude of propulsion units. The previous use of several propulsion units, each comprising an energy converter, may reduce the output due to the multitude of components, because frictional losses may result in this way. By the supply, according to the invention, of propulsion energy to a propulsion unit by a first energy converter and a further energy converter, the power loss may thus be reduced and the efficiency of the propulsion device may be improved. This in turn reduces fuel emission and thus pollutant emission.

According to a further exemplary embodiment, the first energy converter differs from the second energy converter. This means that various concepts of energy converters may be used in order to generate propulsion energy. These different energy converters may, for example, comprise an internal combustion motor and an electric motor, and may be fed the respective fuels needed. In this way, for example, both redundancy and safety may be improved, or an ecological advantage may be gained. For example, in cruising flight it may be possible to operate only the environmentally friendly and low-polluting electric motor, while during takeoff and landing the powerful, but high-polluting, internal combustion engine may be additionally activated in order to provide propulsion energy to the propulsion unit.

According to a further exemplary embodiment of the invention, the propulsion device further comprises a first propulsion shaft and a second propulsion shaft. The first propulsion shaft is adapted to transmit the first propulsion energy of the first energy converter to the propulsion unit. The second propulsion shaft is adapted to transmit the second propulsion energy of the second energy converter to the propulsion unit. Thus in the case of a defect of a propulsion shaft, the propulsion unit may nevertheless be supplied with propulsion energy, so that the risk of the propulsion unit failing may be reduced.

According to a further exemplary embodiment of the invention, the propulsion device comprises a first coupling device. The first propulsion shaft and the second propulsion shaft may be coupled by the first coupling device. By the exemplary embodiment it may be, for example, possible to permanently and rigidly connect an energy converter to the propulsion device, while the second energy converter may be connected, temporarily only, by way of the second propulsion shaft, to the first propulsion shaft for transmitting the propulsion energy. This provides the option of connecting the second energy converter only when required. For example, during cruising flight of an aircraft, by the coupling device, the second energy converter with the second propulsion shaft could be separated from the first propulsion shaft, and the second energy converter could be switched off. The aircraft could thus, for example, take off and land with two engines, and cruise with one engine. Thus, the output of the propulsion device could economically be matched to a given requirement, without generating unnecessary loss of output. Since the second propulsion shaft may be decoupled by the coupling device, the second propulsion shaft, if it may not needed, need not rotate simultaneously in idle, so that no additional drag on the first propulsion shaft arises.

According to a further exemplary embodiment, the propulsion device comprises a second coupling device and a third coupling device. The first propulsion shaft may be coupled to the propulsion unit by the second coupling device so that the first propulsion energy may be transmitted to the propulsion unit. The second propulsion shaft may be coupled to the propulsion unit by the third coupling device so that the second propulsion energy may be transmitted to the propulsion unit. If one of the energy converters, i.e. the first energy converter or the second energy converter, is switched off, it may be individually separated from the first propulsion shaft or from the second propulsion shaft by the second coupling unit or the third coupling unit. This provides an advantage in that, for example, the number of operating hours may selectively, by the first energy converter or the second energy converter in the case of single-engine operation, be distributed evenly to both energy converters. In this way wear and tear of each energy converter may be reduced and cost savings are achieved.

According to the invention, the propulsion device comprises a first tank with a first fuel. The first tank may be designed to supply the first energy converter and the second energy converter with the first fuel. Thus, without the need for a large installation space for the tank, fuel may be supplied to each of the energy converters. In this way installation space may be reduced.

The term "fuel" refers to the educt of the energy converters, from which educt the propulsion energy arises as a product. The fuels are, for example, converted to propulsion energy, by an external reaction, with the use of the energy converters. The fuels may, for example, comprise conventional fuels, for example hydrocarbons such as petrol, kerosene, diesel, hydrogen, methane, natural gas or synthetic hydrocarbons. Furthermore, environmentally friendly fuels may be provided as energy carriers with conventional technical properties, for example synthetic hydrocarbons whose properties are similar to those of kerosene, which synthetic hydrocarbons are made from coal, gas or biomass and mixtures thereof. Furthermore, environmentally friendly fuels may also comprise unconventional properties, for example thermally unstable or gaseous energy carriers. This includes, for example, easily liquefiable hydrocarbons, hydrocarbon gases or hydrogens. Furthermore, in this sense electrical energy may be a fuel, for example for an energy converter that comprises an electric motor. Moreover, the electrical energy may, for example, be obtained from batteries or fuel cells.

According to the invention, the propulsion device comprises the first tank with the first fuel, and a second tank with a second fuel. The first tank is adapted to supply at least the first energy converter with the first fuel, and the second tank is adapted to supply at least the second energy converter with the second fuel. In this way the two energy converters may be installed so as to be separate from each other, each with an associated tank, to obviate the need to install long fuel lines between the energy converters. This may improve safety because the risk of leakages may be reduced. Furthermore, savings in cost and weight are achieved.

According to the invention, the first tank is adapted to supply the first energy converter and the second energy converter with the first fuel. The second tank is adapted to supply the first energy converter and the second energy converter with the second fuel. In this way a redundant system may be provided, by which when the first fuel is not available it is nevertheless possible to supply the first energy converter and the second energy converter with the second fuel. In this way safety may be enhanced, and the failure probability of the propulsion system may be reduced.

According to the invention, the first fuel differs from the second fuel. In this arrangement at least one converter from the first energy converter and the second energy converter may be operated with the first fuel and the second fuel.

With the exemplary embodiment the first and the second energy converter may comprise a bivalent energy converter that may generate propulsion energy from several different fuels. Examples of such energy converters include, for example, turbo engines with variable combustion chambers, or piston engines or planetary piston engines with variable control times. The energy converters are thus suitable for various fuels or energy carriers. Thus, depending on the flight phase, a suitable energy carrier could be used. A more environmentally friendly fuel could be fed to the energy converter when the plane is in the vicinity of an airport, while a less environmentally friendly fuel is used when the plane is at high altitudes or in noncritical regions. In this way the ecological impact may be reduced.

According to a further exemplary embodiment, at least one of the first fuels and of the second fuels is a fuel from the group comprising petrol, kerosene, diesel, hydrogen, methane, natural gas, and synthetic hydrocarbons.

According to a further exemplary embodiment, the drive unit may be selected from the group comprising turboprop propulsion devices, jet engines, jet engines with bypass, and propeller propulsion devices.

According to a further exemplary embodiment, at least one converter from the first energy converter and the second energy converter may be selected from the group comprising gas turbines, rotary piston engines, and electric motors.

According to a further exemplary embodiment, the propulsion device further comprises a control device. The control device is adapted to control the first energy converter and the second energy converter. Thus, depending on requirements, either the first energy converter may be switched on for generating propulsion energy, or the second energy converter may be switched on for generating second propulsion energy. In this way the propulsion output of the propulsion unit may be flexibly set by the control unit.

According to a further exemplary embodiment of the present invention, the control device controls the first energy converter and the second energy converter such that in a first operating state the first propulsion energy and the second propulsion energy may be provided to the propulsion unit. Furthermore, the control device controls the first energy converter and the second energy converter such that in a second operating state the first propulsion energy or the second propulsion energy may be provided to the propulsion unit. Thus, depending on the flight phase, a first operating state or a second operating state may be selected, which may be set by the control unit. For example, if a lot of propulsion energy is required from the propulsion device, the control unit automatically switches to the first operating state, while if less output is required, the control device switches to the second operating state in that the first energy converter or the second energy converter generates propulsion energy. In this way unnecessary energy consumption may be avoided. For example, with the propulsion device at cruise, in which state less propulsion energy is required, the first energy converter or the second energy converter may be completely separated. In this way loss resulting from friction energy, and loss where one of the energy converters, for example, rotates at idle, may be reduced.

According to a further exemplary embodiment of the method, by the first energy converter and the second energy converter, depending on a predetermined flight phase, the propulsion energy is provided. In the case of an aircraft, the term "flight phase" refers, for example, to the takeoff-, landing- or cruising flight phase. In the takeoff and landing phases the aircraft is in an ascent phase and a descent phase of flight respectively, which phases require more propulsion energy. In contrast to this, in the cruising flight phase a reduced amount of propulsion energy is required, so that less propulsion energy may be required.

According to a further exemplary embodiment of the aircraft, the aircraft has an external contour. In this arrangement at least one converter from the first energy converter and the second energy converter is arranged within the exterior contour. The term "exterior contour" of an aircraft refers, for example, to the aircraft skin, which separates the interior of the aircraft from the exterior flow environment. In that the first energy converter and/or the second energy converter are/is installed within the exterior contour, and thus do/does not protrude into the exterior flow environment, drag is reduced so that in turn fuel and pollutant emission may be reduced.

The embodiments of the propulsion device also apply to the method, to the use and to the aircraft, and vice versa.

Moreover, apart from the first energy converter and the second energy converter, for example, a multitude of energy converters may be used that provide and generate propulsion energy for the propulsion unit. In addition, apart from being operated with the first fuel and with the second fuel, each of the energy converters may, for example, be operated with a multitude of different fuels.

### Brief description of the drawings

Below, for further explanation and for a better understanding of the present invention, exemplary embodiments are described in more detail with reference to the enclosed drawings. The following are shown:
- Fig. 1: a diagrammatic view of a known propulsion device;
- Fig. 2: a diagrammatic view of an exemplary embodiment of the invention with two energy converters and one tank;
- Fig. 3: a diagrammatic view of a further exemplary embodiment with two energy converters and one tank;
- Fig. 4: a diagrammatic view of an exemplary embodiment with two energy converters and two tanks;
- Fig. 5: a diagrammatic view of an exemplary embodiment with two energy converters and one tank; and
- Fig. 6: a diagrammatic view of an exemplary embodiment of a bivalent energy converter that comprises two fuel lines.

### Detailed description of exemplary embodiments

Identical or similar components in different figures have the same reference characters. The illustrations in the figures are diagrammatic and not to scale.

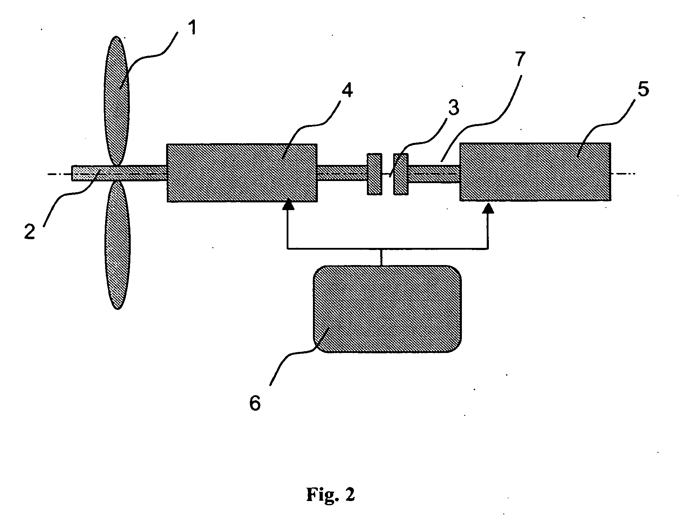

Fig. 2 shows an exemplary embodiment of the propulsion device for an aircraft. The propulsion device comprises a first energy converter 4, a second energy converter 5 and a propulsion unit 1. The first energy converter 4 provides first propulsion energy, and the second energy converter 5 provides second propulsion energy. In this arrangement the first energy converter 4 and the second energy converter 5 are adapted to provide the propulsion unit 1 with first propulsion energy and second propulsion energy. The propulsion unit 1 may generate forward thrust from the first propulsion energy and from the second propulsion energy.

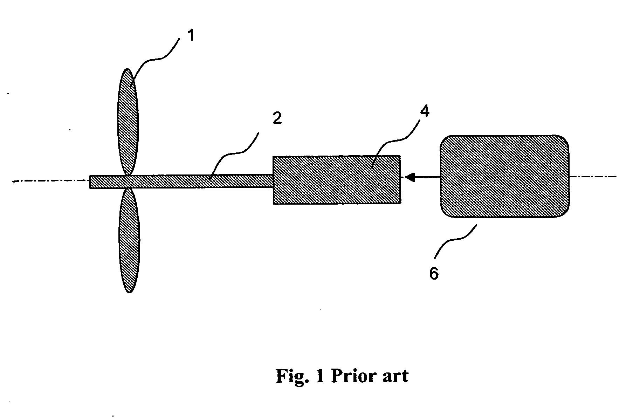

Fig. 1 shows a propulsion device known from the state of the art. A propulsion unit 1 is connected to a first energy converter 4 by way of a first propulsion shaft 2. From a tank 6 the first energy converter 4 obtains fuel, which the first energy converter 4 converts to propulsion energy. The propulsion energy is provided to the propulsion unit 1 by the first propulsion shaft 2. For example, an airscrew or propeller 1 is supplied with propulsion energy by way of a first propulsion shaft 2, which propulsion energy is, for example, provided by a piston engine 4.

Fig. 2 shows, as already described, a first exemplary embodiment of the present invention. By a first propulsion shaft 2 and a second propulsion shaft 7, the first energy converter 4 and the second energy converter 5 provide first propulsion energy and second propulsion energy to the propulsion unit 1. The first energy converter 4 and the second energy converter 5 may be coupled by way of a coupling device 3. Both energy converters may receive a first fuel from a first tank 6. From the first fuel of the first tank 6 the two energy converters 4, 5 may generate propulsion energy.

By the coupling device 3, depending on requirements, the second propulsion shaft 7 may be connected to the first propulsion shaft 2 so that the second energy converter 5 provides second propulsion energy to the propulsion unit 1. For example, if little propulsion energy is required, the second propulsion shaft 7 may be decoupled from the first propulsion shaft 2 by the coupling device 3 so that only the first propulsion shaft 2 with the first energy converter 4 provides first propulsion energy. Unnecessary idling of the propulsion shaft 7 and thus of the second energy converter 5 is thus prevented so that loss, for example due to friction, may be prevented.

Furthermore, the design of the first energy converter and of the second energy converter may differ. A first energy converter may, for example, comprise a piston engine, and the second energy converter may comprise an electric motor, which engine and motor either together or separately may provide propulsion energy to the first propulsion shaft 2 and/or to the second propulsion shaft 7.

With the exemplary embodiment according to Fig. 2 it may thus be possible to set an energy requirement of propulsion energy depending on the flight phase. For example, in a takeoff or landing phase an aircraft may generate propulsion energy with both energy converters, while in cruising flight it may generate propulsion energy with only one energy converter. In this way it may be possible to efficiently provide propulsion energy as required, without experiencing very substantial energy loss.

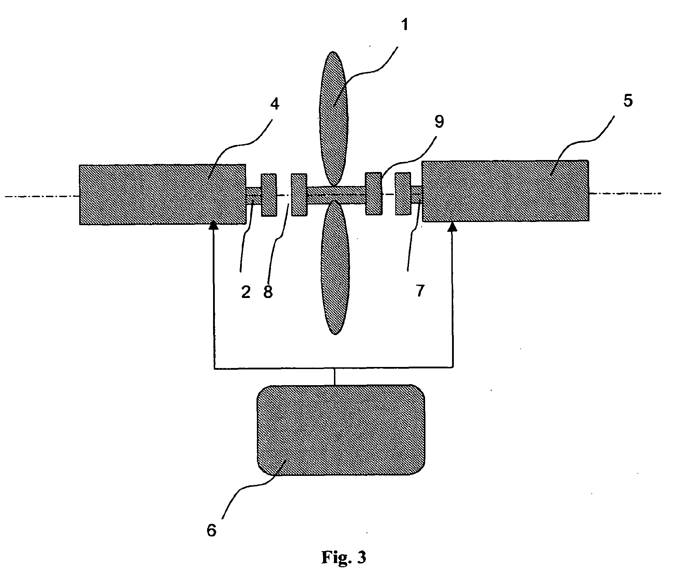

Fig. 3 shows a further exemplary embodiment of the propulsion device. As shown in Fig. 3, the first energy converter may be connected to the propulsion unit I by a first coupling unit 8, and the second energy converter 5 may be connected to the propulsion unit 1 by the third coupling device 8. The number of service hours of the first energy converter 4 and of the second energy converter 5 may thus be evenly distributed. For example, in the case of single-engine operation, the number of service hours may be evenly divided between the two energy converters 4, 5. In this way different service cycles of the individual energy converters may be prevented, so that the maintenance effort and thus maintenance expenditure may be reduced.

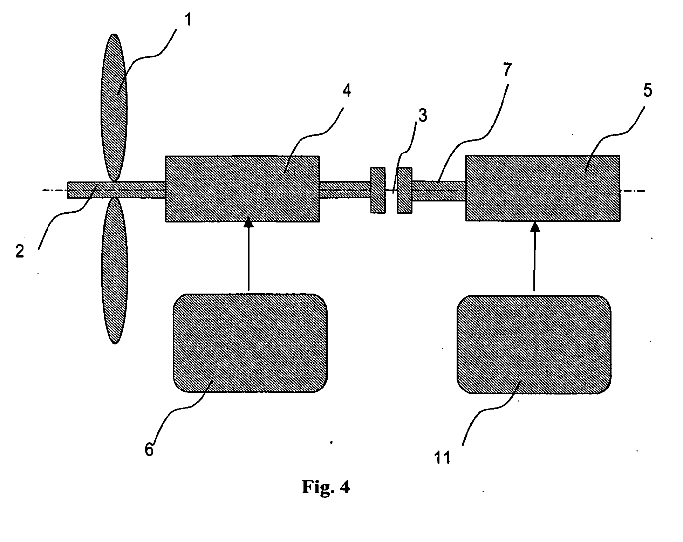

Fig. 4 shows a further exemplary embodiment in which each energy converter has a tank 6, 11 of its own. Thus the first energy converter 4 has a first tank 6, and the second energy converter 5 has a second tank 11. The second energy converter may be connected to the second propulsion shaft 2 by the second propulsion shaft 7 by way of the first coupling device 3. This provides the option of using different energy converters 4, 5, which moreover use different fuels. For example, if the first tank I comprises kerosene, a combustion chamber may be used as the first energy converter 4, and in the case where the second tank 4 comprises a battery to provide electrical energy, an electric motor may be used as the second energy converter 5. In this way, depending on requirements, the suitable characteristics of the individual energy converters 4, 5 may be used. For example, if the aircraft is in the vicinity of an airport, the propulsion energy may, for example, be generated by an environmentally friendly energy converter 4, 5, for example by way of an electric motor that does not produce any emissions.

Furthermore, for example, at different flight altitudes a particular energy converter 4, 5 may be used. If an energy converter 4, 5 is, for example, operated with hydrogen, water arises as exhaust gas. At altitudes below 10,000 m this water remains in the atmosphere for only 2 weeks to a maximum of 6 weeks. On the other hand, it may be often believed that CO2 remains in the atmosphere for up to approximately 100 years. Thus, for example, the hydrogen-operated energy converter may be used up to 10,000 m, and from 10,000 m conventional propulsion with a combustion chamber as an energy converter may be used. Thus, apart from economic aspects, the propulsion device may also be set to ecological aspects.

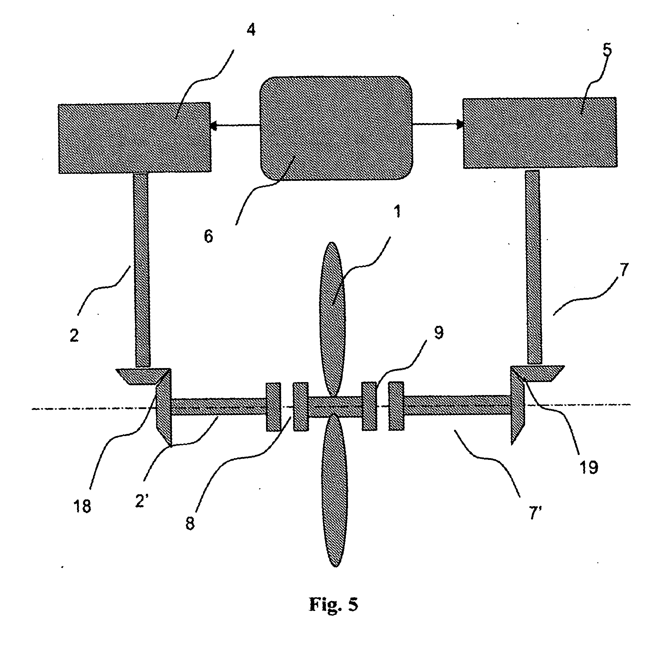

Fig. 5 shows an exemplary embodiment of the invention with a first energy converter 4 and a second energy converter 5, which obtain fuel from a first tank 6. The respective propulsion energy of the first energy converter 4 or of the second energy converter 5 may be transmitted to the propulsion unit 1 by way of propulsion shafts 2, 2' and second propulsion shafts 7, 7'. By way of, for example, various undertakings (gears), such as a first bevel gear arrangement 18 and a second bevel gear arrangement 19, the respective propulsion energies may be transmitted along considerable distances to the propulsion unit 1. Thus, for example, the first energy converter and/or the second energy converter may be arranged so as to be away from the first propulsion unit 1. The energy converters 4, 5 may be connected, as required, by way of the second coupling device 8 or the third coupling device 9.

It may be thus possible, for example, to integrate the tank 6 and the first energy converter 4 and the second energy converter 5 in an aircraft. If the first energy converter 4, the second energy converter 5 and the tank 6 are situated, for example, within an exterior contour of the aircraft, then only the propulsion unit 1 may be in the free air stream outside the exterior contour of the aircraft. It may be thus possible to reduce drag so that the loss due to flow resistance may be reduced.

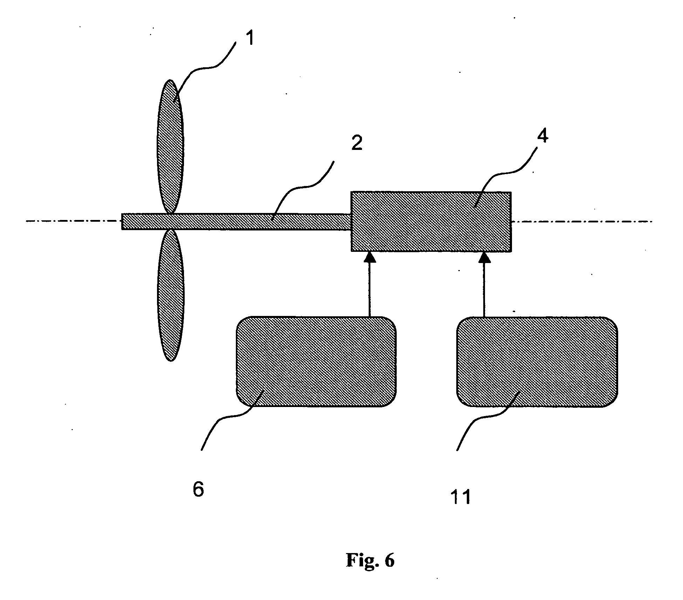

Fig. 6 shows an exemplary embodiment of an energy converter 4, 5, which from a first tank 6 obtains a first fuel, and from a second tank 11 obtains a second fuel. In this arrangement the first fuel and the second fuel may be different. The energy converter 4, 5 may thus be bivalent or constructed in a hybrid design. This means that the energy converter 4, 5 may, for example, on the one hand generate propulsion energy by conventional kerosene fuels, and on the other hand, for example, by natural gas. In this way, depending on the economic and ecological requirements, fuel supply by a first or a second fuel may be selected so that the propulsion device may provide propulsion energy or forward thrust in an efficient and environmentally friendly manner. It may be thus possible, for example, to use environmentally friendly fuels in centres of population such as in proximity to airports, and to use efficient fuels, which, however, are associated with an increased amount of pollutants, in cruising flight.

In order to control the coupling devices 3, 8, 9 of the energy converters 6, 11, a control unit may be used which automatically and in a self-acting manner, depending on requirements, may connect the first energy converter 4 or the second energy converter 5 for generating propulsion energy. In this way apart from manual control of the first propulsion energy or of the second propulsion energy, automatic control may take place so that an improved economic and ecologically friendly propulsion device may be provided.

In addition, it should be pointed out that "comprising" does not exclude other elements or steps, and "a" or "one" does not exclude a plural number. Furthermore, it should be pointed out that characteristics or steps which have been described with reference to one of the above exemplary embodiments may also be used in combination with other characteristics or steps of other exemplary embodiments described above. Reference characters in the claims are not to be interpreted as limitations.

## Claims

1. A propulsion device for an aircraft, wherein the propulsion device comprises:
a first energy converter (4);
a second energy converter (5);
a propulsion unit (1);
wherein the first energy converter (4) provides first propulsion energy;
wherein the second energy converter (5) provides second propulsion energy; wherein the first energy converter (4) and the second energy converter (5) are adapted to provide the first propulsion energy and the second propulsion energy to the propulsion unit (1);
wherein the propulsion unit (1) is adapted to generate forward thrust by at least one of the first propulsion energies and the second propulsion energies;
**characterized in that** the propulsion device further comprises:
a first tank (6) with a first fuel; and
a second tank (10) with a second fuel;
wherein the first tank (6) is adapted to supply at least the first energy converter (4) with the first fuel;
wherein the second tank (10) is adapted to supply at least the second energy converter (5) with the second fuel;
wherein the first fuel differs from the second fuel; and
wherein at least one converter from the first energy converter (4) and the second energy converter (5) is operable with the first fuel and the second fuel.

2. The propulsion device of claim 1,
wherein the first energy converter (4) differs from the second energy converter (5).

3. The propulsion device of claim 1 or 2, further comprising:
a first propulsion shaft (2); and
a second propulsion shaft (7);
wherein the first propulsion shaft (2) is adapted to transmit the first propulsion energy of the first energy converter (4) to the propulsion unit (1);
wherein the second propulsion shaft (7) is adapted to transmit the second propulsion energy of the second energy converter (5) to the propulsion unit (1).

4. The propulsion device of claim 3, further comprising:
a first coupling device (3);
wherein the first propulsion shaft (2) and the second propulsion shaft (7) is adapted to be coupled by the first coupling device (3).

5. The propulsion device of claim 3, further comprising:
a second coupling device (8);
a third coupling device (9);
wherein the first propulsion shaft (2) is adapted to be coupled to the propulsion unit (1) by the second coupling device (8) so that the first propulsion energy is transmittable to the propulsion unit (1);
wherein the second propulsion shaft (7) is adapted to be coupled to the propulsion unit (1) by the third coupling device (9) so that the second propulsion energy is transmittable to the propulsion unit (1).

6. The propulsion device of any one of claims 1 to 5, further comprising:
the first tank (6) with the first fuel;
wherein the first tank (6) is adapted to supply the first energy converter (4) and the second energy converter (5) with the first fuel.

7. The propulsion device of one of claims 1 to 6,
wherein the first tank (6) is adapted to supply the first energy converter (4) and the second energy converter (5) with the first fuel;
wherein the second tank (10) is adapted to supply the first energy converter (4) and the second energy converter (5) with the second fuel.

8. The propulsion device of any one of claims 1 to 7,
wherein at least one converter from the first energy converter (4) and the second energy converter (5) is selected from the group comprising gas turbines, rotary piston engines, and electric motors.

9. The propulsion device of any one of claims 1 to 8, further comprising:
a control device;
wherein the control device is adapted to control the first energy converter (4) and the second energy converter (5).

10. The propulsion device of claim 9,
wherein the control device is adapted for controlling the first energy converter (4) and the second energy converter (5) such that in a first operating state the first propulsion energy and the second propulsion energy is providable to the propulsion unit (1);
wherein the control device is adapted for controlling the first energy converter (4) and the second energy converter (5) such that in a second operating state the first propulsion energy or the second propulsion energy is providable to the propulsion unit (1).

11. A method for propelling an aircraft, wherein the method comprises:
providing first propulsion energy by a first energy converter (4);
providing second propulsion energy of a second energy converter (5);
supplying a propulsion unit (1) with the first propulsion energy and the second propulsion energy;
generating forward thrust by the propulsion unit (1);
**characterized in that** the method further comprises:
operating the first energy converter (4) optionally with a first fuel from a first tank or a second fuel from a second tank;
wherein the first energy converter (4) is operable with the first fuel from the first tank and the second fuel from the second tank;
wherein the first fuel differs from the second fuel.

12. The method of claim 11,
wherein providing the propulsion energy by the first energy converter (4) and the second energy converter (5) depends on a predetermined flight phase.

13. The use of the propulsion device of any one of claims 1 to 10 in an aircraft.

14. An aircraft comprising a propulsion device of any one of claims 1 to 10.

15. An aircraft of claim 14,
wherein the aircraft has an exterior contour;
wherein at least one converter from the first energy converter (4) and the second energy converter (5) is arranged within the exterior contour.

## Patentansprüche

1. Antriebsvorrichtung für ein Luftfahrzeug, wobei die Antriebsvorrichtung aufweist:
einen ersten Energiewandler (4);
einen zweiten Energiewandler (5);
eine Antriebseinheit (1);
wobei der erste Energiewandler (4) eine erste Antriebsenergie bereitstellt;
wobei der zweite Energiewandler (5) eine zweite Antriebsenergie bereitstellt;
wobei der erste Energiewandler (4) und der zweite Energiewandler (5) eingerichtet sind, der Antriebseinheit (1) die erste Antriebsenergie und die zweite Antriebsenergie bereitzustellen;
wobei die Antriebseinheit (1) eingerichtet ist, mittels zumindest einer der ersten Antriebsenergien und der zweiten Antriebsenergien einen Vorschub zu erzeugen;
**dadurch gekennzeichnet, dass** die Antriebsvorrichtung weiterhin aufweist:
einen ersten Tank (6) mit einem ersten Kraftstoff; und
einen zweiten Tank (10) mit einem zweiten Kraftstoff;
wobei der erste Tank (6) eingerichtet ist, zumindest den ersten Energiewandler (4) mit dem ersten Kraftstoff zu versorgen;
wobei der zweite Tank (10) eingerichtet ist, zumindest den zweiten Energiewandler (5) mit dem zweiten Kraftstoff zu versorgen;
wobei sich der erste Kraftstoff von dem zweiten Kraftstoff unterscheidet; und
wobei zumindest der erste Energiewandler (4) oder der zweite Energiewandler mit dem ersten Kraftstoff oder dem zweiten Kraftstoff betreibbar ist.

2. Antriebsvorrichtung nach Anspruch 1,
wobei sich der erste Energiewandler (4) von dem zweiten Energiewandler (5) unterscheidet.

3. Antriebsvorrichtung nach einem der Ansprüche 1 oder 2, weiterhin aufweisend:
eine erste Antriebswelle (2); und
eine zweite Antriebswelle (7);
wobei die erste Antriebswelle (2) eingerichtet ist, die erste Antriebsenergie von dem ersten Energiewandler (4) an die Antriebseinheit (1) zu übertragen;
wobei die zweite Antriebswelle (7) eingerichtet ist, die zweite Antriebsenergie von dem zweiten Energiewandler (5) an die Antriebseinheit (1) zu übertragen.

4. Antriebsvorrichtung nach Anspruch 3,
eine erste Kupplungseinrichtung (3);
wobei die erste Antriebswelle (2) und die zweite Antriebswelle (7) eingerichtet sind, mittels der ersten Kupplungseinrichtung (3) gekoppelt zu werden.

5. Antriebsvorrichtung nach Anspruch 3, weiterhin aufweisend:
eine zweite Kupplungseinrichtung (8); und
eine dritte Kupplungseinrichtung (9);
wobei die erste Antriebswelle (2) eingerichtet ist, mittels der zweiten Kupplungseinrichtung (8) derart mit der Antriebseinheit (1) gekoppelt zu werden, dass die erste Antriebsenergie an die Antriebseinheit (1) übertragbar ist;
wobei die zweite Antriebswelle (2) eingerichtet ist, mittels der dritten Kupplungseinrichtung (9) derart mit der Antriebseinheit (1) gekoppelt zu werden, dass die zweite Antriebsenergie an die Antriebseinheit (1) übertragbar ist.

6. Antriebsvorrichtung nach einem der Ansprüche 1 bis 5, weiterhin aufweisend:
den ersten Tank (6) mit dem ersten Kraftstoff;
wobei der erste Tank (6) eingerichtet ist, den ersten Energiewandler (4) und den zweiten Energiewandler (5) mit dem ersten Kraftstoff zu versorgen.

7. Antriebsvorrichtung nach einem der Ansprüche 1 bis 6,
wobei der erste Tank (6) eingerichtet ist, den ersten Energiewandler (4) und den zweiten Energiewandler (5) mit dem ersten Kraftstoff zu versorgen;
wobei der zweite Tank (6) eingerichtet ist, den zweiten Energiewandler (4) und den zweiten Energiewandler (5) mit dem zweiten Kraftstoff zu versorgen.

8. Antriebsvorrichtung nach einem der Ansprüche 1 bis 7,
wobei zumindest der erste Energiewandler (4) oder der zweite Energiewandler (5) aus der Gruppe bestehend aus Gasturbinen, Drehkolbenmotoren und Elektromotoren ausgewählt ist.

9. Antriebsvorrichtung nach einem der Ansprüche 1 bis 8, weiterhin aufweisend:
eine Steuereinrichtung;
wobei die Steuereinrichtung eingerichtet ist, den ersten Energiewandler (4) und den zweiten Energiewandler (5) zu steuern.

10. Antriebsvorrichtung nach Anspruch 9,
wobei die Steuereinrichtung eingerichtet ist, den ersten Energiewandler (4) und den zweiten Energiewandler (5) derart zu steuern, dass in einem ersten Betriebszustand die erste Antriebsenergie und die zweite Antriebsenergie der Antriebseinheit (1) bereitstellbar ist;
wobei die Steuereinrichtung eingerichtet ist, den ersten Energiewandler (4) und den zweiten Energiewandler (5) derart zu steuern, dass in einem zweiten Betriebszustand die erste Antriebsenergie oder die zweite Antriebsenergie der Antriebseinheit (1) bereitstellbar ist.

11. Verfahren zum Antrieb eines Luftfahrzeugs, wobei das Verfahren aufweist:
Bereitstellen einer ersten Antriebsenergie mittels eines ersten Energiewandlers (4);
Bereitstellen einer zweiten Antriebsenergie eines zweiten Energiewandlers (5);
Versorgen einer Antriebseinheit (1) mit der ersten Antriebsenergie und der zweiten Antriebsenergie;
Erzeugen eines Vorschubs mittels der Antriebseinheit (1);
**dadurch gekennzeichnet, dass** das Verfahren weiterhin aufweist:
Betreiben des ersten Energiewandlers (4) wahlweise mit einem ersten Kraftstoff aus einem ersten Tank oder einem zweiten Kraftstoff aus einem zweiten Tank;
wobei der erste Energiewandler (4) mit dem ersten Kraftstoff aus dem ersten Tank und dem zweiten Kraftstoff aus dem zweiten Tank betreibbar ist;
wobei sich der erste Kraftstoff von dem zweiten Kraftstoff unterscheidet.

12. Verfahren nach Anspruch 11,
wobei die Antriebsenergie mittels des ersten Energiewandlers (4) und des zweiten Energiewandlers (5) in Abhängigkeit von einer vorbestimmten Flugphase bereitgestellt wird.

13. Verwendung der Antriebsvorrichtung nach einem der Ansprüche 1 bis 10 in einem Luftfahrzeug.

14. Luftfahrzeug mit einer Antriebsvorrichtung nach einem der Ansprüche 1 bis 10.

15. Luftfahrzeug nach Anspruch 14,
wobei das Luftfahrzeug eine Außenkontur aufweist;
wobei zumindest der erste Energiewandler (4) oder der zweite Energiewandler (5) innerhalb der Außenkontur angeordnet ist.

## Revendications

1. Dispositif de propulsion pour un aéronef, le dispositif de propulsion comportant :
un premier convertisseur d'énergie (4),
un second convertisseur d'énergie (5),
une unité de propulsion (1),
dans lequel le premier convertisseur d'énergie (4) fournit une première énergie de propulsion,
dans lequel le second convertisseur d'énergie (5) fournit une seconde énergie de propulsion,
dans lequel le premier convertisseur d'énergie (4) et le second convertisseur d'énergie (5) sont adaptés pour fournir la première énergie de propulsion et la seconde énergie de propulsion à l'unité de propulsion (1),
dans lequel l'unité de propulsion (1) est adaptée pour générer une poussée normale par l'intermédiaire d'au moins une des premières énergies de propulsion et des secondes énergies de propulsion,
**caractérisé en ce que** le dispositif de propulsion comporte en outre :
un premier réservoir (6) avec un premier combustible, et
un second réservoir (10) avec un second combustible,
dans lequel le premier réservoir (6) est adapté pour alimenter au moins le premier convertisseur d'énergie (4) en premier combustible,
dans lequel le second réservoir (10) est adapté pour alimenter au moins le second convertisseur d'énergie (5) en second combustible,
dans lequel le premier combustible diffère du second combustible, et
dans lequel au moins un convertisseur parmi le premier convertisseur d'énergie (4) et le second convertisseur d'énergie (5) peut fonctionner avec le premier combustible et le second combustible.

2. Dispositif de propulsion selon la revendication 1,
dans lequel le premier convertisseur d'énergie (4) diffère du second convertisseur d'énergie (5).

3. Dispositif de propulsion selon la revendication 1 ou 2, comportant en outre :
un premier arbre de propulsion (2), et
un second arbre de propulsion (7),
dans lequel le premier arbre de propulsion (2) est adapté pour transmettre la première énergie de propulsion du premier convertisseur d'énergie (4) à l'unité de propulsion (1),
dans lequel le second arbre de propulsion (7) est adapté pour transmettre la seconde énergie de propulsion du second convertisseur d'énergie (5) à l'unité de propulsion (1).

4. Dispositif de propulsion selon la revendication 3, comportant également :
un premier dispositif d'accouplement (3),
dans lequel le premier arbre de propulsion (2) et le second arbre de propulsion (7) sont adaptés pour être accouplés par le premier dispositif d'accouplement (3).

5. Dispositif de propulsion selon la revendication 3, comportant de plus :
un deuxième dispositif d'accouplement (8),
un troisième dispositif d'accouplement (9),
dans lequel le premier arbre de propulsion (2) est adapté pour être accouplé à l'unité de propulsion (1) par le deuxième dispositif d'accouplement (8) de telle sorte que la première énergie de propulsion peut être transmise à l'unité de propulsion (1),
dans lequel le second arbre de propulsion (7) est adapté pour être accouplé à l'unité de propulsion (1) par le troisième dispositif d'accouplement (9) de telle sorte que la seconde énergie de propulsion peut être transmise à l'unité de propulsion (1).

6. Dispositif de propulsion selon l'une quelconque des revendications 1 à 5, comportant en outre :
le premier réservoir (6) avec le premier combustible,
dans lequel le premier réservoir (6) est adapté pour alimenter le premier convertisseur d'énergie (4) et le second convertisseur d'énergie (5) en premier combustible.

7. Dispositif de propulsion selon l'une des revendications 1 à 6,
dans lequel le premier réservoir (6) est adapté pour alimenter le premier convertisseur d'énergie (4) et le second convertisseur d'énergie (5) en premier combustible,
dans lequel le second réservoir (10) est adapté pour alimenter le premier convertisseur d'énergie (4) et le second convertisseur d'énergie (5) en second combustible.

8. Dispositif de propulsion selon l'une quelconque des revendications 1 à 7,
dans lequel au moins un convertisseur parmi le premier convertisseur d'énergie (4) et le second convertisseur d'énergie (5) est choisi parmi le groupe comportant des turbines à gaz, des moteurs à pistons rotatifs et des moteurs électriques.

9. Dispositif de propulsion selon l'une quelconque des revendications 1 à 8, comportant en outre :
un dispositif de commande,
dans lequel le dispositif de commande est adapté pour commander le premier convertisseur d'énergie (4) et le second convertisseur d'énergie (5).

10. Dispositif de propulsion selon la revendication 9,
dans lequel le dispositif de commande est adapté pour commander le premier convertisseur d'énergie (4) et le second convertisseur d'énergie (5) de telle sorte que dans un premier état de fonctionnement, la première énergie de propulsion et la seconde énergie de propulsion peuvent être fournies à l'unité de propulsion (1),
dans lequel le dispositif de commande est adapté pour commander le premier convertisseur d'énergie (4) et le second convertisseur d'énergie (5) de telle sorte que dans un second état de fonctionnement, la première énergie de propulsion ou la seconde énergie de propulsion peut être fournie à l'unité de propulsion (1).

11. Procédé pour propulser un avion, le procédé comportant les étapes consistant à :
fournir une première énergie de propulsion par l'intermédiaire d'un premier convertisseur d'énergie (4),
fournir une seconde énergie de propulsion par l'intermédiaire d'un second convertisseur d'énergie (5),
alimenter une unité de propulsion (1) en première énergie de propulsion et en seconde énergie de propulsion,
générer une poussée normale par l'unité de propulsion (1),
**caractérisé en ce que** le procédé comporte en outre l'étape consistant à :
faire fonctionner le premier convertisseur d'énergie (4) facultativement avec un premier combustible provenant d'un premier réservoir ou un second combustible provenant d'un second réservoir,
dans lequel le premier convertisseur d'énergie (4) peut fonctionner avec le premier combustible provenant du premier réservoir et le second combustible provenant du second réservoir,
dans lequel le premier combustible diffère du second combustible.

12. Procédé selon la revendication 11,
dans lequel la fourniture de l'énergie de propulsion par le premier convertisseur d'énergie (4) et le second convertisseur d'énergie (5) dépend d'une phase de vol prédéterminée.

13. Utilisation du dispositif de propulsion selon l'une quelconque des revendications 1 à 10 dans un aéronef.

14. Aéronef comportant un dispositif de propulsion selon l'une quelconque des revendications 1 à 10.

15. Aéronef selon la revendication 14,
dans lequel l'avion a un contour extérieur,
dans lequel au moins un convertisseur parmi le premier convertisseur d'énergie (4) et le second convertisseur d'énergie (5) est agencé à l'intérieur du contour extérieur.
